# EUROPÄISCHE PATENTSCHRIFT

(11) **EP 1 191 288 B1**
(45) Veröffentlichungstag und Bekanntmachung des Hinweises auf die Patenterteilung: **20.12.2006**
(21) Anmeldenummer: 01122495.3
(22) Anmeldetag: 20.09.2001
(51) Int. Cl.: F24J 2/05, F24J 2/50, F24J 2/20, F24J 2/04

(54) **Evakuierbarer Solar-Flachkollektor**
Evacuated solar collector
Collecteur solaire sous vide

(30) Priorität: 22.09.2000 DE 10047000
(43) Veröffentlichungstag der Anmeldung: 27.03.2002
(73) Patentinhaber: Mack, Robert, 74523 Schwäbisch Hall (DE); Spahl, Thomas, 56220 Bassenheim (DE)
(72) Erfinder: Mack, Robert, 74523 Schwäbisch Hall (DE); Spahl, Thomas, 56220 Bassenheim (DE)
(74) Vertreter: Clemens, Gerhard

(56) Entgegenhaltungen:
- EP-A- 0 027 773
- WO-A-00/03185
- WO-A-99/10934
- DE-A- 2 555 015
- DE-A- 2 615 584
- DE-A- 2 639 354
- DE-A- 3 115 309
- DE-A- 3 143 274
- DE-A- 4 323 270
- DE-A- 4 442 502
- DE-A- 19 812 006
- DE-U- 7 909 689
- DE-U- 9 103 890
- GB-A- 2 117 109
- US-A- 4 051 832
- US-A- 4 186 723
- US-A- 4 332 241
- US-A- 6 119 683

## Beschreibung

### TECHNISCHES GEBIET

Die vorliegende Erfindung betrifft einen evakuierbaren Solar-Flachkollektor mit einem ein Kanalsystem mit Kanälen oder Rohren für ein Wärmetransportmittel aufweisenden Absorber, einer den Absorber abdeckenden, lichtdurchlässigen und von dem Absorber beabstandeten oberen Scheibe, einer den Absorber abdeckenden, von dem Absorber beabstandeten unteren Scheibe, wobei die obere und untere Scheibe bei Evakuierung des Kollektors gegen die Wirkung des äußeren Luftdrucks von innen abgestützt werden, der Absorber aus verformbarem Material ausgebildet ist, der Absorber eine obere Absorberplatte und eine mit der oberen Absorberplatte verbundene untere Absorberplatte aufweist und Lagerelemente vorhanden sind, die durch Querschnittsausformungen der oberen und unteren Absorberplatte gebildet sind, die Lagerelemente durch mechanische und/oder thermische Verformung, insbesondere Tiefziehen, Pressen oder dergleichen, der oberen und unteren Absorberplatte hergestellt sind.

Die vorliegende Erfindung betrifft auch einen evakuierbaren Solar-Flachkollektor mit den oben genannten Merkmalen, wobei die Kanäle durch separate Rohre gebildet werden und anstelle der oberen und unteren Absorberplatte eine einzige Absorberplatte vorhanden sein kann.

### STAND DER TECHNIK

Es sind Flachkollektoren bekannt, bei denen der Absorber auf einer Wärmedämmschicht innerhalb einer Wanne gelagert ist. Oberseitig ist die Wanne mit einer lichtdurchlässigen Glasscheibe abgedeckt. Derartige Flachkollektoren sind in ihrem Aufbau relativ voluminös und weisen insbesondere im oberen Bereich relativ hohe Wärmeverluste auf. Häufig kommt es bei derartigen Kollektoren zu einem Beschlagen der Glasscheibe.

Weiterhin sind sogenannte Röhrenkollektoren bekannt, bei denen der Absorber in einer evakuierten Glasröhre angeordnet ist. Das Vorsehen einer Wärmedämmung ist in diesem Falle nicht erforderlich. Derartige Lösungen sind im Vergleich zu dem oben beschriebenen Flachkollektor relativ teuer. Ein weiterer Nachteil besteht darin, dass sie nicht in einfacher Art und Weise in ein Dach integriert werden können. Der Gesamtwirkungsgrad derartiger Röhrenkollektoren ist auf die Gesamtfläche bezogen kleiner als der der oben beschriebenen Flachkollektoren, obwohl der Einzelwirkungsgrad höher ist.

Aus der DE 79 09 689 ist ein Vakuum-Flachkollektor bekannt, bei dem die Glasfläche infolge des hohen Druckunterschiedes abgestützt werden muss. Dazu wird vorgeschlagen, eine Vielzahl von Stützen innerhalb des Kollektors anzuordnen. In einer ersten Alternative werden dabei die Stützen durch ein Loch in der Absorberfläche geführt, so dass sich die Glasscheibe über die Stützen auf der Rückwand abstützt. In einer zweiten Variante wird vorgeschlagen, zwischen der Glasscheibe und dem Absorber und direkt darunter zwischen dem Absorber und der Rückwand insgesamt zwei Stützen pro Stützpunkt vorzusehen. Ein Nachteil dieser Stützen ist darin zu sehen, dass durch diese ein relativ großer Wärmetransport vom Absorber zum Glas und zur Rückwand erfolgt, so dass ein relativ hoher Leitungsverlust gegeben ist. Durch die Löcher in der Absorberfläche gemäß der ersten Variante wird die wirksame Absorberfläche reduziert, was dem Wirkungsgrad nicht förderlich ist. Darüber hinaus stellen die Stützen eine Abschattung dar, was den Wirkungsgrad weiter vermindert. Das Anordnen der Stützen stellt einen hohen Montageaufwand dar, was sich ungünstig auf eine wirtschaftliche Herstellung derartiger Flachkollektoren auswirkt.

In der US 4,186,723 wird ein Kollektor vorgeschlagen, bei dem oberseitig und unterseitig ein Glaskörper angeordnet ist, der zur Erhöhung seiner Steifigkeit eine wellenförmige Querschnittskontur aufweist. Die Herstellung einer derartigen Glaskontur ist sehr aufwendig. Aufgrund der wellenförmigen Außenstruktur kann es zu unerwünschten Schmutzansammlungen auf der Oberfläche kommen.

In der DE 25 55 015 ist ein ebener Sonnenergiesammler mit einer strahlabsorbierender Fläche, die mit einem Kanal- oder Rohrleitungssystem für ein Wärmetransportmittel ausgerüstet ist, und einer transparenten Abdeckplatte beschrieben. Die Abdeckplatte und die Absorberfläche sind durch schlecht wärmeleitende Abstandshalter gegeneinander abgestützt.

In der DE 26 39 354 ist ein ebener Sonnenenergiesammler der gleichen Art beschrieben. Dabei sind oberseitig und unterseitig Deckscheiben angeordnet, die gegeneinander durch Stützsysteme, die die Scheiben flächenhaft berühren, abgestützt sind. Der Absorber selbst weist Noppen auf, die dazu dienen, ein Verrutschen des Absorbers innerhalb der beiden Deckscheiben zu verhindern und die keinerlei Abstützfunktion aufweisen.

In der DE 31 43 274 A ist ein Solarkollektor der eingangs genannten Art beschrieben. Dabei werden zwei Absorberplatten eingesetzt, die nach oben und unten weisende Abstützelemente aufweisen. Die Platten weisen Rinnen auf und sind so zusammengeschweißt, dass sie eine einzelne Platte mit Durchlaufkanälen bilden, durch die das Fluid zur Erwärmung hindurchgelassen wird. Die Durchlaufkanäle sind auch durch das Innere der Abstützelemente geführt. Wird der Kollektor schräg installiert, so sammelt sich Luft insbesondere im Hohlbereich der Lagerelemente an. Diese Luftansammlungen sind relativ schlecht zu beseitigen beziehungsweise es wird eine derart lange Entlüftungszeit benötigt, welche in der Praxis üblicherweise nicht zur Verfügung steht. Dabei ist zu beachten, dass bei Solaranlagen in der Regel keine automatische Entlüftung auf Dauer umsetzbar ist, da dies in vielen Fällen zu Dichtigkeitsproblemen führt. Darüber hinaus ist die Herstellung relativ aufwendig. Die Forderung, dass nach dem Einbau eines Kollektors innerhalb eines Tages die gesamte Luft aus dem Inneren des Absorbers entfernt sein muss kann hier nicht eingehalten werden.

In der DE 44 42 502 C2 ist ein Vakuum-Flachkollektor mit einem monolithisch aus höchstens vier Glasscheiben aufgebautem Kollektorgrundkörper beschrieben. Die Glasscheiben sind an ihren Rändern miteinander verschmolzen. An die Glasscheiben sind Ausformungen angegossen, die eine Abstützfunktion übernehmen. Ein derartiger Kollektor bildet ein monolithisches System, wobei das Material Glas als relativ schlechter Wärmeleiter bekannt ist. Die Herstellung eines derartigen Kollektors ist relativ aufwendig, was einen wirtschaftlichen Einsatz entgegensteht.

Die EP 0 027 773 A offenbart einen Vakuum-Flachkollektor, bei dem im Inneren zwischen der oberen und unteren Scheibe Abstützelemente vorhanden sind.

### DARSTELLUNG DER ERFINDUNG

Ausgehend von dem genannten Stand der Technik liegt der vorliegenden Erfindung die Aufgabe beziehungsweise das technische Problem zugrunde, einen evakuierbaren Solar-Flachkollektor der eingangs genannten Art anzugeben, der eine wirtschaftliche Herstellung gewährleistet, einen hohen Wirkungsgrad besitzt und mit einer kleinen Konstruktionshöhe auskommt. Der Erfindung liegt weiterhin das technische Problem beziehungsweise die Aufgabe zugrunde, ein Verfahren zur wirtschaftlichen Herstellung eines derartigen Flachkollektors anzugeben.

Der erfindungsgemäße, evakuierbare Solar-Flachkollektor ist durch die Merkmale der unabhängigen Ansprüche 1 und 2 gegeben. Vorteilhafte Ausgestaltungen und Weiterbildungen sind Gegenstand der von den unabhängigen Ansprüche 1 und 2 direkt oder indirekt abhängigen Ansprüche.

Der erfindungsgemäße evakuierbare Solar-Flachkollektor zeichnet sich demgemäß dadurch aus, dass im Bereich der Lagerelemente die Absorberplatten punktförmig und/oder im Bereich des Kanalsystems linienförmig miteinander verbunden sind, die Kanäle des Kanalsystems für das Wärmetransportmittel zwischen benachbarten Lagerelementen verlaufen und die Kanäle des Kanalsystems durch mechanische und/oder thermische Verformung, insbesondere Tiefziehen, Pressen, der oberen und/oder unteren Absorberplatte hergestellt sind, wobei die durch die obere und untere Absorberplatten gebildeten Kanäle ein maximales Stichmaß aufweisen, das kleiner ist als die Höhe der Lagerelemente.

Der alternative evakuierbaren Solar-Flachkollektor mit den separaten Rohrkanälen zeichnet sich demgemäß dadurch aus, dass die Rohre wärmeleitend an den Absorberplatten oder an der einzigen Absorberplatte zwischen benachbarten Lagerelementen angeordnet sind.

Ein wesentlicher Gedanke der Erfindung ist somit, dass der Absorber selbst die Stützungen aufweist. Der Berührungsdurchmesser beziehungsweise die Gesamtberührungsfläche des Absorbers mit den umgebenden Bauteilen kann dadurch sehr klein gehalten werden, wodurch eine äußerst geringe Wärmeableitung erzielt werden kann. Darüber hinaus kommt es praktisch zu keinen Abschattungseffekten, was den Wirkungsgrad weiter erhöht. Durch die vorgeschlagene Konstruktion kann die Konstruktionshöhe extrem niedrig gehalten werden.

Eine besonders steife Ausbildung der Lagerelemente kann gemäß einer vorteilhaften Weiterbildung dadurch gewährleistet werden, dass die Lagerelemente eine im Wesentlichen punktförmige Lagerspitze und eine dem angeformten Bauteil zugewandte verbreiterte Basis aufweisen, wobei in einer vorteilhaften Ausführungsvariante die Lagerelemente im Wesentlichen kegelförmig ausgebildet sind.

Eine bevorzugte Ausgestaltung zeichnet sich dadurch aus, dass die untere Scheibe ebenfalls als lichtdurchlässige Scheibe ausgebildet ist.

Um zu einer möglichst "gleichmäßigen" Lagerung der Scheiben zu gelangen, ist es besonders vorteilhaft, die Lagerpunkte in den Schnittpunkten eines orthogonalen Rasters zwischen den Kanälen anzuordnen, wobei das Rastermaß bevorzugt im Bereich zwischen 4 bis 8 cm (Zentimeter) liegt.

Die Verbindung der oberen und unteren Absorberplatte kann hierbei als Schweißung, Klebung oder dergleichen punkt- oder flächenförmige Verbindungsart hergestellt sein.

Als besonders vorteilhaft hat es sich herausgestellt, die obere und unter Absorberplatte als tiefgezogenes Blech herzustellen.

Mit dem vorgeschlagenen Flachkollektor ist es möglich, Lagerelemente mit einer Höhe vorzusehen, die im Bereich zwischen 2 bis 10 mm (Millimeter) liegt, wodurch eine äußerst kompakte Bauhöhe des Gesamtkollektors erzielt werden kann.

Um den Wirkungsgrad zu verbessern, ist es vorteilhaft, zumindest die obere Absorberplatte mit einer selektiven Beschichtung zu versehen, die die Wärmeaufnahme erhöht und die Wärmeabgabe nach außen vermindert.

Ebenso kann die Beschichtung der oberen Absorberplatte als Fotovoltaikzelle zur Stromgewinnung genutzt werden. Die Beschichtung kann hier auch nur bereichsweise erfolgen.

In einer alternativen Ausgestaltung ist die obere und untere Scheibe als Teil eines den Absorber umgebenden Glasgehäuses ausgebildet.

Eine besonders bevorzugte Ausführungsform zeichnet sich dadurch aus, dass die obere und/oder untere Scheibe umfangsmäßig über ein Gummiprofil an der Trageinheit gelagert ist, so dass eine Schutzwirkung für die gegen Bruch empfindlichen Glasscheiben erzielt werden kann.

Das erfindungsgemäße Verfahren ist durch die Merkmale der unabhängigen Ansprüche 10, 11, 12 und 13 gegeben. Vorteilhafte Verfahrensschritte sind Gegenstand weiterer abhängiger Ansprüche.

Eine erste Herstellvariante ist gekennzeichnet durch folgende Verfahrensschritte:
- Verformen einer oberen Absorberplatte zum Ausbilden der Lagerelemente mit einer Lagerspitze oder Kappe,
- Verformen einer unteren Absorberplatte zum Ausbilden der Lagerelemente mit einer Lagerspitze oder Kappe,
- Aufeinanderlegen der oberen und unteren Absorberplatte, derart, dass die Lagerelemente nach außen weisen,
- Verbinden der oberen und unteren Absorberplatte mittels Linienverbindung, die die Kanäle des Kanalsystems begrenzen und/oder Verbinden der oberen und unteren Absorberplatte mittels Punktverbindungen im Bereich der Lagerelemente,
- Einbringen von Druck in das Innere der Kanäle derart, dass sich die Wandung der oberen und unteren Absorberplatte zur Bildung der Kanäle plastisch verformt,
- gegebenenfalls selektives Beschichten und/oder zumindest teilweises Beschichten mit einer fotovoltaischen Schicht zumindest der oberen Absorberplatte,
- dichtendes Einbringen des durch die obere und untere Absorberplatte gebildeten Absorbers unter der Bereitstellung von mit den Kanälen korrespondierenden Anschlüssen für das Wärmetransportmittel in ein Gehäuse mit zumindest einer den Absorber abdeckenden, lichtdurchlässigen Scheibe, und
- Erzeugen eines Vakuums im Inneren des Gehäuses.

Eine zweite Herstellvariante ist gekennzeichnet durch folgende Verfahrensschritte:
- Verformen einer oberen Absorberplatte zum Ausbilden der Lagerelemente mit einer Lagerspitze und von Teilkonturen der Kanäle,
- Verformen einer unteren Absorberplatte zum Ausbilden der Lagerelemente mit einer Lagerspitze und der Teilkonturen der Kanäle,
- Aufeinanderlegen der oberen und unteren Absorberplatte derart, dass die Lagerelemente nach außen weisen,
- Verbinden der oberen und unteren Absorberplatte mittels Linienverbindung, die die Kanäle des Kanalsystems begrenzen und/oder Verbinden der oberen und unteren Absorberplatte mittels Punktverbindungen im Bereich der Lagerelemente,
- gegebenenfalls selektives Beschichten und/oder zumindest teilweises Beschichten mit einer fotovoltaischen Schicht zumindest der oberen Absorberplatte,
- dichtendes Einbringen des durch die obere und untere Absorberplatte gebildeten Absorbers unter der Bereitstellung von mit den Kanälen korrespondierenden Anschlüssen für das Wärmetransportmittel in ein Gehäuse mit zumindest einer den Absorber abdeckenden, lichtdurchlässigen Scheibe, und
- Erzeugen eines Vakuums im Inneren des Gehäuses.

Eine wirtschaftliche Herstellweise kann gemäß einer bevorzugten Verfahrensausgestaltung dadurch umgesetzt werden, dass das Verbinden der oberen und der unteren Absorberplatte mittels Widerstandspunkt- und/oder -nahtschweißung erfolgt.

Bevorzugt wird die Form der oberen und unteren Absorberplatte durch Tiefziehen, Druckluft oder Pressen hergestellt.

Eine weitere Herstellungsvariante ist gekennzeichnet durch folgende Verfahrensschritte:
- Verformen einer oberen Absorberplatte zum Ausbilden der Lagerelemente mit einer Lagerspitze,
- Verformen einer unteren Absorberplatte zum Ausbilden der Lagerelemente mit einer Lagerspitze,
- Aufeinanderlegen der oberen und unteren Absorberplatte, derart, dass die Lagerelemente nach außen zeigen
- Verbinden der oberen und der unteren Absorberplatte,
- wärmeleitendes Anbringen eines separaten Rohrsystems mit Rohrkanälen an den Absorberplatten im Bereich zwischen benachbarten Lagerelementen,
- gegebenenfalls selektives Beschichten und/oder zumindest bereichsweises Beschichten mit einer fotovoltaischen Schichtzumindest der oberen Absorberplatte,
- dichtendes Einbringen des durch die obere und untere Absorberplatte gebildeten Absorbers unter der Bereitstellung von mit den Rohrkanälen korrespondierenden Anschlüssen für das Wärmetransportmittel in ein Gehäuse mit zumindest einer den Absorber abdeckenden lichtdurchlässigen Scheibe und
- Erzeugen eines Vakuums im Inneren des Gehäuses.

Schließlich zeichnet sich eine weitere Herstellungsvariante durch folgende Verfahrensschritte aus:
- Verformen einer einzigen Absorberplatte eines Absorbers zum Ausbilden von nach oben und nach unten weisenden Lagerelementen oder Kappen mit Spitze,
- selektives Beschichten und/oder zumindest bereichsweises Beschichten mit einer fotovoltaischen Schicht des Absorbers,
- wärmeleitendes Anbringen eines separaten Rohrsystems mit Rohrkanälen an einzigen Absorberplatte im Bereich zwischen benachbarten Lagerelementen,
- dichtendes Einbringen des Absorbers mit dem Rohrkanalsystem unter der Bereitstellung von mit den Rohrkanälen korrespondierenden Anschlüssen für das Wärmetransportmittel in ein Gehäuse mit zumindest einer den Absorber abdeckenden lichtdurchlässigen Scheibe, und
- Erzeugen eines Vakuums im Inneren des Gehäuses.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Schnitt durch einen Solar-Flachkollektor mit einem Absorber mit eingeformten Lagerelementen und Kanälen,
- Fig. 2: schematischer Detailschnitt durch den Kollektor gemäß Fig. 1 im Bereich von Lagerelementen,
- Fig. 3: schematische Detailperspektivdarstellung eines Lagerelements,
- Fig. 4 a bis g: schematische Perspektivdarstellung des Herstellverfahrens des Flachkollektors gemäß Fig. 1,
- Fig. 5: schematische Perspektivdarstellung des Absorbers des Flachkollektors gemäß Fig. 1,
- Fig. 6: schematischer Schnitt durch einen Solar-Flachkollektor mit einem Absorber und separat wärmeleitend angeordnetem Rohrkanalsystem,
- Fig. 7: schematische Schnittdarstellung durch einen Absorber mit einer Absorberplatte und einem Rohrkanalsystem und
- Fig. 8: schematischer Schnitt durch den Randbereich eines Kollektors mit Gummischutzprofil.

### WEGE ZUM AUSFÜHREN DER ERFINDUNG

Ein Solar-Flachkollektor 10.1 besitzt einen Absorber 12, der luftdicht zwischen einer oberen, lichtdurchlässigen Scheibe 14, einer unteren Scheibe 18 und einer umlaufenden Trageinheit 26 angeordnet ist. Die obere Scheibe 14, und die untere Scheibe 18 ist luftdicht mit der Trageinheit 26 verbunden. Ein umlaufendes Gummiprofil 16 schützt den Kollektor gegen Beschädigung.

Durch die lichtdurchlässige Scheibe 14 erwärmen Sonnenstrahlen 36 ein in einem Kanalsystem durch den Absorber 12 geführtes Wärmetransportmittel. Da im Inneren des Kollektors 10 Vakuum herrscht, müssen die Scheiben 14 beziehungsweise 18 innerhalb ihrer Fläche abgestützt werden.

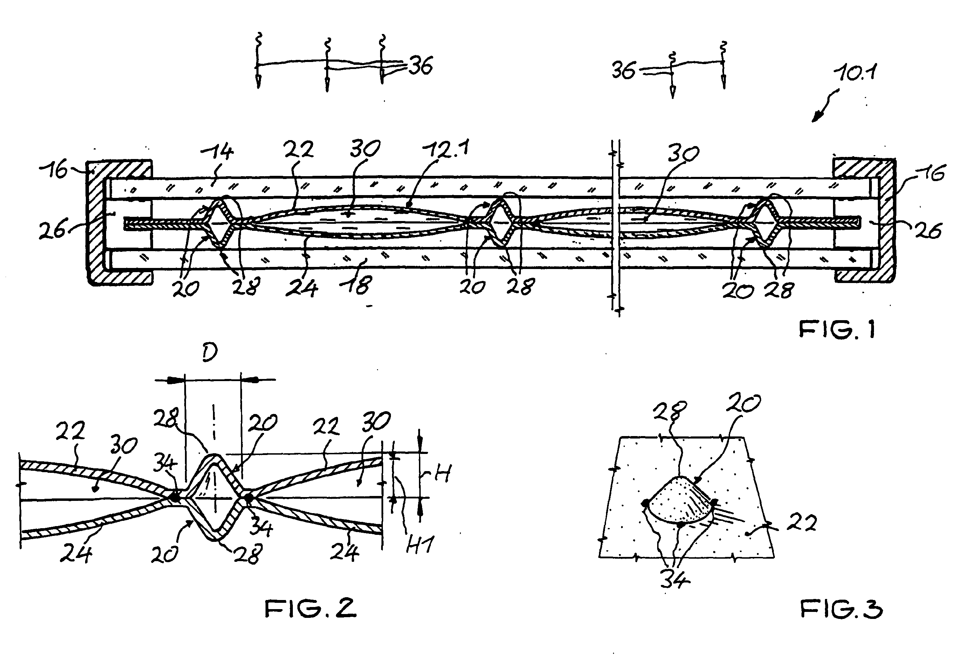

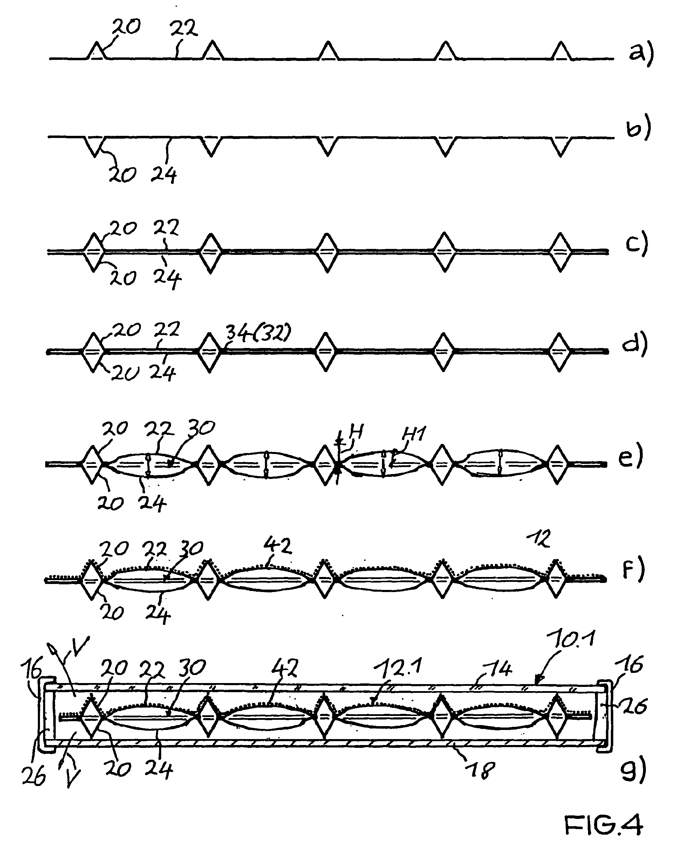

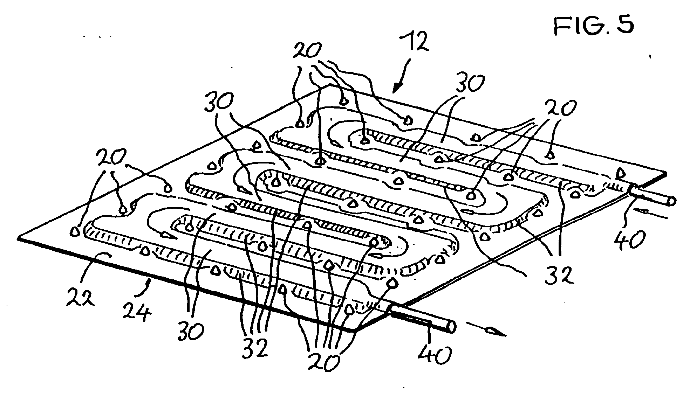

Der Absorber 12 besteht aus einer oberen Absorberplatte 22 und einer unteren Absorberplatte 24. Beide Absorberplatten 22, 24 besitzen jeweils nach außen weisende Lagerelemente 20, die rasterförmig verteilt (siehe Fig. 5) vorhanden sind. Zwischen den rasterförmig verteilt vorhandenen Lagerelementen 20 ist ein Kanalsystem mit Kanälen 30 vorhanden, wobei die Kanäle 30 durch nach außen gewölbte Flächen der oberen Absorberplatte 22 beziehungsweise der unteren Absorberplatte 24 gebildet werden. Wie in Fig. 2 beziehungsweise Fig. 3 näher dargestellt, sind die Lagerelemente 20 als kegelförmige Einformungen ausgebildet, wobei die obere Absorberplatte 22 beziehungsweise untere Absorberplatte 24 jeweils punktförmig auf der Kegelspitze 28 des Lagerelements 20 gelagert ist. Die Höhe H des Lagerelementes 20 ist jeweils so bemessen, dass diese in jedem Fall größer ist als die maximale Stichhöhe H1 der konvex gewölbten Fläche der Absorberplatten 22 beziehungsweise 24. Dadurch kommt die obere Scheibe 14 beziehungsweise die untere Scheibe 18 lediglich über die Lagerpunkte (Kegelspitze 28) der Lagerelemente 20 mit dem Absorber 12 in Kontakt. Insgesamt ergibt sich dadurch eine sehr geringe Berührungsfläche, wodurch eine äußerst geringe Wärmeableitung gewährleistet werden kann. Dabei können Höhen H gewählt werden, die kleiner als 1 cm (Zentimeter) sind. Der Durchmesser D des kegelförmigen Lagerelements 20 liegt im vorliegenden Ausführungsbeispiel im Bereich von ca. 1 cm (Zentimeter).

Im Bereich der Basis der Lagerelemente 20 liegen die Absorberplatten 22, 24 aufeinander und sind über Schweißpunkte 34 miteinander verbunden.

Wie in Fig. 5 schematisch dargestellt, sind die Absorberplatten 22, 24 weiterhin über linienförmige Schweißverbindungen 32 miteinander verbunden, wobei diese Schweißverbindungen 32 die seitlichen Ränder der Kanäle 30 des Kanalsystems darstellen. Bei dem in Fig. 5 schematisch dargestellten Absorber 12 sind darüber hinaus noch schematisch die Anschlüsse 40 für den Zu- beziehungsweise Ablauf des Wärmetransportmittels dargestellt, wobei der Weg des Wärmetransportmittels innerhalb der Kanäle 30 des Kanalsystems durch Pfeile schematisch dargestellt ist.

In Fig. 4 sind schematisch die einzelnen Herstellungsschritte bei der Herstellung des beschriebenen Flachkollektors dargestellt. Zunächst werden an der oberen Absorberplatte 22 und der unteren Absorberplatte 24 Lagerelemente 20 durch Tiefziehen eingeformt (Verfahrensschritte a) und b)).

Im Verfahrensschritt c) wird die obere Absorberplatte 22 auf die untere Absorberplatte 24 gelegt, wobei die Lagerelemente 20 in gleicher Position angeordnet werden, so dass sich im Bereich zweier Lagerelemente 20 im Wesentlichen eine Doppelkegelstruktur einstellt.

Dann wird die obere Absorberplatte 22 mit der unteren Absorberplatte 24 beispielsweise über Schweißnähte 32, 34 in oben beschriebener Art verbunden. Dabei wird durch linienförmige Schweißnähte 34 das zwischen Lagerelementen 20 verlaufende Kanalsystem mit seinen noch zu erzeugenden Kanälen begrenzt (Verfahrensschritt d) oder es wird eine Schweißverbindung nahe der Lagerelemente 20 erstellt.

Im Verfahrensschritt e) wird in das Kanalsystem Druck eingeleitet, derart, dass sich die zwischen den Lagerelementen 20 befindlichen Flächen der oberen Absorberplatte 22 und der unteren Absorberplatte 24 nach außen wölben, wobei das maximale Stichmaß H1 der Auswölbungen in jedem Fall kleiner ist als die Höhe H der kegelförmigen Lagerelemente 20.

Im Verfahrensschritt f) wird im vorliegenden Ausführungsbeispiel auf der oberen Absorberplatte 22 eine selektive Beschichtung 42 aufgebracht, die den Wirkungsgrad erhöht. Es kann auch eine fotovoltaische Schicht aufgebracht werden, um Strom zu erzeugen. Dann wird der im Verfahrensschritt f) fertiggestellte Absorber 12 zusammen mit der unteren Scheibe 18 und der oberen Scheibe 14 luftdicht in der Trageinheit 26 angeordnet. Gleichzeitig werden die Anschlüsse für den Zubeziehungsweise Ablauf des Wärmetransportmittels bereitgestellt. Im letzten Verfahrensschritt g) wird im Inneren des Kollektors 10.1 ein Vakuum (Pfeil V) hergestellt.

In einer nicht dargestellten Ausführungsvariante ist es möglich, die Kanäle nicht mittels Einbringen von Druck zu erzeugen, sondern beispielsweise ebenfalls in einem Tiefziehvorgang.

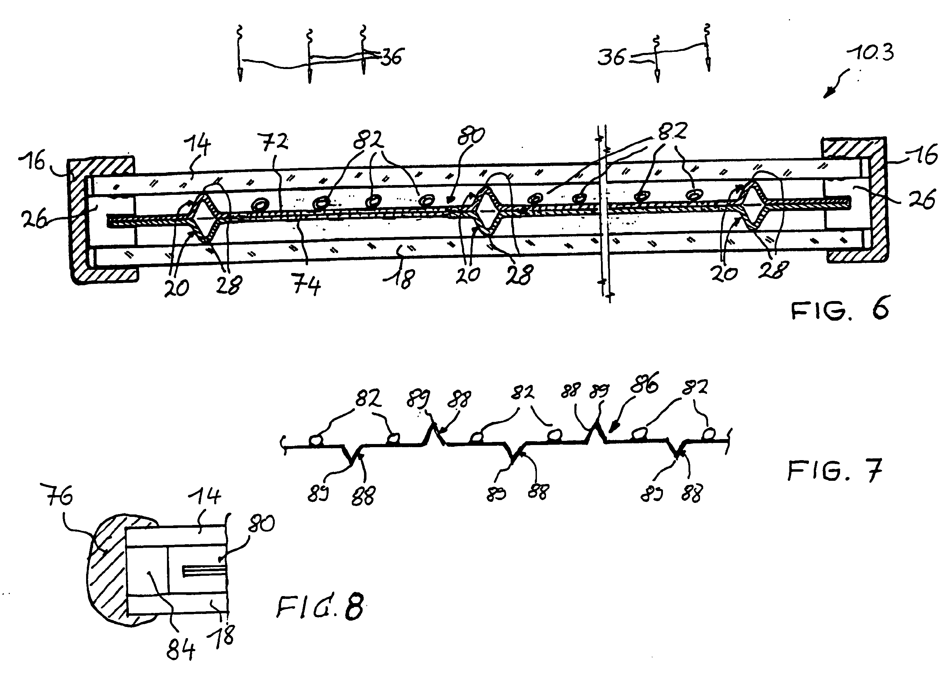

In der in Figur 6 dargestellten Ausführungsvariante eines Solarkollektors 10.3 ist eine obere Absorberplatte 72 und eine untere Absorberplatte 74 vorhanden, die lediglich die Lagerelemente 20 aufweist, wobei zwischen den Lagerelementen 20 ein Rohrkanalsystem mit Rohrkanälen 82 wärmeleitend auf der oberen Absorberplatte 72 angeordnet ist. Die Rohrkanäle 82 können auch oder nur auf der unteren Absorberplatte 74 angeordnet sein.

In Figur 7 ist eine weitere Ausführungsvariante eines Absorbers 86 dargestellt, der lediglich aus einer Platte besteht mit nach oben und unten weisenden eingeformten Lagerelementen 88 mit Spitze 89. Zwischen den Lagerelementen 88 ist ebenfalls ein Rohrkanalsystem mit Rohrkanälen 82 wärmeleitend verbunden mit dem Absorber 86 vorhanden.

Figur 8 zeigt eine Ausführungsvariante mit einer zwischen der oberen Scheibe 14 und der unteren Scheibe 18 angeordneten Dichteinheit 84, wobei der äußere Randbereich zu Schutzzwecken von einem Gummiprofil 76 umgeben ist. In einer nicht dargestellten vorteilhaften Ausgestaltung kann auf das Gummiprofil 76 verzichtet werden, so dass im Randbereich umlaufend lediglich die Dichteinheit 84 angeordnet ist.

## Patentansprüche

1. Evakuierbarer Solar-Flachkollektor (20.1) mit
- einem ein Kanalsystem mit Kanälen (30) für ein Wärmetransportmittel aufweisenden Absorber (12.1),
- einer den Absorber (12.1) abdeckenden, lichtdurchlässigen und von dem Absorber (12.1) beabstandeten oberen Scheibe (14),
- einer den Absorber (12.1) abdeckenden, von dem Absorber (12.1) beabstandeten unteren Scheibe (18),
- wobei die obere und untere Scheibe (14, 18) bei Evakuierung des Kollektors (10.1) gegen die Wirkung des äußeren Luftdrucks von innen abgestützt werden,
- der Absorber (12.1) lichtundurchlässig ausgebildet ist,
- der Absorber (12.1) aus verformbarem Material ausgebildet ist,
- der Absorber (12.1) eine obere Absorberplatte (22) und eine mit der oberen Absorberplatte (22) verbundene untere Absorberplatte (24) aufweist und Lagerelemente (20) vorhanden sind, die durch Querschnittsausformungen der oberen und unteren Absorberplatte (22, 24) gebildet sind,
- die Lagerelemente (20) durch mechanische und/oder thermische Verformung, insbesondere Tiefziehen, Pressen, der oberen und unteren Absorberplatte (22, 24) hergestellt sind,
**dadurch gekennzeichnet, dass**
- im Bereich der Lagerelemente (20) die Absorberplatten (22, 24) punktförmig und/oder im Bereich des Kanalsystems linienförmig miteinander verbunden sind,
- die Kanäle (30) des Kanalsystems für das Wärmetransportmittel zwischen benachbarten Lagerelementen (20) verlaufen und
- die Kanäle (30) des Kanalsystems durch mechanische und/oder thermische Verformung, insbesondere Tiefziehen, Pressen, der oberen und/oder unteren Absorberplatte (22, 24) hergestellt sind,
- wobei die durch die obere und untere Absorberplatten (22, 24) gebildeten Kanäle (30) ein maximales Stichmaß (H1) aufweisen, das kleiner ist als die Höhe (H) der Lagerelemente (20).

2. Evakuierbarer Solar-Flachkollektor (10.3) mit
- einem ein Kanalsystem mit separaten Rohren (82) für ein Wärmetransportmittel aufweisenden Absorber,
- einer den Absorber abdeckenden, licht-durchlässigen und von dem Absorber beabstandeten oberen Scheibe (14),
- einer den Absorber abdeckenden, von dem Absorber beabstandeten unteren Scheibe (18),
- wobei die obere und untere Scheibe bei Evakuierung des Kollektors (10.3) gegen die Wirkung des äußeren Luftdrucks von innen abgestützt werden,
- der Absorber lichtundurchlässig ausgebildet ist,
- der Absorber aus verformbarem Material ausgebildet ist,
- der Absorber eine obere Absorberplatte (22) und eine mit der oberen Absorberplatte (22) verbundene untere Absorberplatte (24) oder eine einzige Absorberplatte aufweist und Lagerelemente (20; 88) vorhanden sind, die durch Querschnittsausformungen der oberen und unteren beziehungsweise der einzigen Absorberplatte (22, 24) gebildet sind,
- die Lagerelemente (20; 88) durch mechanische und/oder thermische Verformung, insbesondere Tiefziehen, Pressen, der oberen und unteren beziehungsweise der einzigen Absorberplatte (22, 24) hergestellt sind,
**dadurch gekennzeichnet, dass**
- die Rohre (82) wärmeleitend an den Absorberplatten (72) oder an der einzigen Absorberplatte zwischen benachbarten Lagerelementen (20; 88) angeordnet sind.

3. Evakuierbarer Solar-Flachkollektor nach Anspruch 1 oder 2,
**dadurch gekennzeichnet, dass**
- die Lagerelemente (20) eine im Wesentlichen punktförmige Lagerspitze (28) und eine dem angeformten Bauteil zugewandte verbreiterte Basis aufweisen.

4. Evakuierbarer Solar-Flachkollektors nach nach einem oder mehreren der vorstehenden Ansprüche,
**dadurch gekennzeichnet, dass**
- die Lagerelemente (20) im Wesentlichen kegelförmig ausgebildet sind.

5. Evakuierbarer Solar-Flachkollektor nach einem oder mehreren der vorstehenden Ansprüche,
**dadurch gekennzeichnet, dass**
- die untere Scheibe (18) ebenfalls lichtdurchlässig ausgebildet ist.

6. Evakuierbarer Solar-Flachkollektor nach einem oder mehreren der vorstehenden Ansprüche,
**dadurch gekennzeichnet, dass**
- die obere und untere Absorberplatte (22, 24) aus Metall ausgebildet sind.

7. Evakuierbarer Solar-Flachkollektor nach einem oder mehreren der vorstehenden Ansprüche,
**dadurch gekennzeichnet, dass**
- zumindest die obere Absorberplatte (22) eine selektive Beschichtung aufweist, um die Wärmeaufnahme zu erhöhen und die Wärmeabgabe nach außen zu vermindern.

8. Evakuierbarer Solar-Flachkollektor nach einem oder mehreren der vorstehenden Ansprüche,
**dadurch gekennzeichnet, dass**
zumindest die obere Absorberplatte (22) zumindest bereichsweise eine fotovoltaische Schicht aufweist, um neben der Wäremeerzeugung eine Stromerzeugung realisieren zu können.

9. Evakuierbarer Solar-Flachkollektor nach einem oder mehreren der vorstehenden Ansprüche,
**dadurch gekennzeichnet, dass**
- zwischen oberer und/oder unterer Scheibe (14, 18) im Randbereich umlaufend eine Dichteinheit (84), angeordnet ist.

10. Verfahren zum Herstellen eines evakuierbaren Solar-Flachkollektors nach einem oder mehreren der vorstehenden Ansprüche 1 oder 3 bis 9 in Verbindung mit Anspruch 1
**gekennzeichnet durch** folgende Verfahrensschritte:
- Verformen einer oberen Absorberplatte (22) zum Ausbilden der Lagerelemente (20) mit einer Lagerspitze oder Kappe (28),
- Verformen einer unteren Absorberplatte (24) zum Ausbilden der Lagerelemente (20) mit einer Lagerspitze oder Kappe (28),
- Aufeinanderlegen der oberen und unteren Absorberplatte (22, 24), derart, dass die Lagerelemente (20) nach außen weisen,
- Verbinden der oberen und unteren Absorberplatte (22, 24) mittels Linienverbindung (32), die die Kanäle (30) des Kanalsystems begrenzen, und/oder Verbinden der oberen und unteren Absorberplatte (22, 24) mittels Punktverbindungen (34) im Bereich der Lagerelemente (20),
- Einbringen von Druck zwischen der oberen und unteren Absorberplatte (22, 24) derart, dass sich die Wandung der oberen und unteren Absorberplatte (22, 24) zur Bildung der Kanäle (30) plastisch verformt,
- dichtendes Einbringen des **durch** die obere und untere Absorberplatte (22, 24) gebildeten Absorbers (12) unter der Bereitstellung von mit den Kanälen korrespondierenden Anschlüssen (40) für das Wärmetransportmittel in ein Gehäuse (14, 16, 18) mit zumindest einer den Absorber (12) abdeckenden, lichtdurchlässigen Scheibe (14), und
- Erzeugen eines Vakuums im Inneren des Gehäuses (14, 16, 18).

11. Verfahren zum Herstellen eines Evakuierbaren Solar-Flachkollektors nach einem oder mehreren der Ansprüche 1, oder 3 bis 9 in Verbindung mit Anspruch 1,
**gekennzeichnet durch** folgende Verfahrensschritte:
- Verformen einer oberen Absorberplatte (22) zum Ausbilden der Lagerelemente (20) mit einer Lagerspitze (28) und von Teilkonturen der Kanäle (30),
- Verformen einer unteren Absorberplatte (24) zum Ausbilden der Lagerelemente (20) mit einer Lagerspitze (28) und von Teilkonturen der Kanäle (30),
- Aufeinanderlegen der oberen und unteren Absorberplatte (22, 24), derart, dass die Lagerelemente (20) nach außen weisen,
- Verbinden der oberen und unteren Absorberplatte (22, 24) mittels Linienverbindung (32), die die Kanäle (30) des Kanalsystems begrenzen und/oder Verbinden der oberen und unteren Absorberplatte (22, 24) mittels Punktverbindungen (34) im Bereich der Lagerelemente (20),
- dichtendes Einbringen des **durch** die obere und untere Absorberplatte (22, 24) gebildeten Absorbers (12) unter der Bereitstellung von mit den Kanälen korrespondierenden Anschlüssen (40) für das Wärmetransportmittel in ein Gehäuse (14, 16, 18) mit zumindest einer den Absorber (12) abdeckenden, lichtdurchlässigen Scheibe (14), und
- Erzeugen eines Vakuums im Inneren des Gehäuses (14, 16, 18).

12. Verfahren zum Herstellen eines Evakuierbaren Solar-Flachkollektors nach einem oder mehreren der vorstehenden Ansprüche 2 oder 3-9 in Verbindung mit Anspruch 2,
**gekennzeichnet durch** folgende Verfahrensschritte
- Verformen einer oberen Absorberplatte (72) zum Ausbilden der Lagerelemente (20) mit einer Lagerspitze (28),
- Verformen einer unteren Absorberplatte (74) zum Ausbilden der Lagerelemente (20) mit einer Lagerspitze (28),
- Aufeinanderlegen der oberen und unteren Absorberplatte (22, 24), derart, dass die Lagerelemente (20) nach außen weisen,
- Verbinden der oberen und der unteren Absorberplatte (22, 24),
- wärmeleitendes Anbringen eines separaten Rohrsystems mit Rohrkanälen (82) an den Absorberplatten (72) im Bereich zwischen benachbarten Lagerelementen (20),
- dichtendes Einbringen des **durch** die obere und untere Absorberplatte (22, 24) gebildeten Absorbers (80) unter der Bereitstellung von mit dem Rohrsystem korrespondierenden Anschlüssen für das Wärmetransportmittel in ein Gehäuse (14, 16, 18) mit zumindest einer den Absorber (80) abdeckenden lichtdurchlässigen Scheibe (14) und
- Erzeugen eines Vakuums im Inneren des Gehäuses (14, 16, 18) .

13. Verfahren zum Herstellen eines Evakuierbaren Solar-Flachkollektors nach einem oder mehreren der Ansprüche 2 oder 3-9 in Verbindung mit Anspruch 2,
**gekennzeichnet durch** folgende Verfahrensschritte
- Verformen einer einzigen Absorberplatte eines Absorbers (86) zum Ausbilden von nach oben und nach unten weisenden Lagerelementen oder Kappen (88) mit Spitze (89),
- wärmeleitendes Anbringen eines separaten Rohrsystems mit Rohrkanälen (82) an einzigen Absorberplatte im Bereich zwischen benachbarten Lagerelementen (88),
- dichtendes Einbringen des Absorbers (86) mit dem Rohrkanalsystem unter der Bereitstellung von mit den Rohrkanälen korrespondierenden Anschlüssen für das Wärmetransportmittel in ein Gehäuse mit zumindest einer den Absorber (86) abdeckenden lichtdurchlässigen Scheibe (14), und
- Erzeugen eines Vakuums im Inneren des Gehäuses.

14. Verfahren nach einem der Anspruch 10 bis 13,
**dadurch gekennzeichnet, dass**
- die obere und untere Absorberplatte (22, 24) durch Tiefziehen oder Druckluft oder Pressen geformt wird.

## Claims

1. Evacuated flat solar collector (10.1) with
- an absorber (12.1), which has a duct system with ducts (30) for a heat transport means,
- an upper pane (14), which covers the absorber (12.1), is translucent and is separated from the absorber (12.1),
- a lower pane (18), which covers the absorber (12.1) and is separated from the absorber (12.1),
- wherein the upper and lower panes (14, 18) are supported from the inside against the effect of the external air pressure when the collector (10.1) is evacuated,
- the absorber (12.1) is opaque,
- the absorber (12.1) is composed of deformable material,
- the absorber (12.1) has an upper absorber plate (22) and a lower absorber plate (24), connected to the upper absorber plate (22), and supporting elements (20) are present, which are formed by cross-sectional deformation in the upper and lower absorber plates (22, 24),
- the supporting elements (20) are produced by mechanical and/or thermal forming, in particular deep-drawing or thermoforming, or stamping, of the upper and lower absorber plates (22, 24),
**characterized in that**
- in the region of the supporting elements (20), the absorber plates (22, 24) are connected to one another at points and/or by means of lines in the region of the duct system,
- the ducts (30) of the duct system for the heat transport means run between adjacent supporting elements (20) and
- the ducts (30) of the duct system are produced by mechanical and/or thermal forming, in particular deep drawing, thermoforming or stamping, of the upper and/or lower absorber plates (22, 24),
- wherein the ducts (30) formed by the upper and lower absorber plates (22, 24) have a maximum gauge height (H1), which is less than the height (H) of the supporting elements (20).

2. Evacuated flat solar collector (10.3) with
- an absorber comprising a duct system with separate tubes (82) for a heat transport means,
- an upper pane (14), which covers the absorber, is translucent and is separated from the absorber,
- a lower pane (18), which covers the absorber and is separated from the absorber,
- wherein the upper and lower panes are supported from the inside against the effect of the external air pressure when the collector (10.3) is evacuated,
- the absorber is opaque,
- the absorber is composed of a deformable material,
- the absorber has an upper absorber plate (22) and a lower absorber plate (24), connected to the upper absorber plate (22), or a single absorber plate, and supporting elements (20; 88) are present, which are formed by cross-sectional deformation in the upper and lower, or the single, absorber plates (22, 24),
- the supporting elements (20; 88) are produced by mechanical and/or thermal forming, in particular deep-drawing, thermoforming or stamping, of the upper and lower, or the single, absorber plate or plates (22, 24),
**characterized in that**
- the tubes (82) are arranged on the absorber plates (72) or the single absorber plate between adjacent supporting elements (20; 88) such that they conduct heat.

3. Evacuated flat solar collector according to Claim 1 or 2,
**characterized in that**
- the supporting elements (20) has an essentially punctiform supporting tip (28) and a widened base facing the integrally-formed component.

4. Evacuated flat solar collector according to one or more of the preceding claims,
**characterized in that**
- the supporting elements (20) are essentially conical.

5. Evacuated flat solar collector according to one or more of the preceding claims,
**characterized in that**
- the lower pane (18) is also translucent.

6. Evacuated flat solar collector according to one or more of the preceding claims,
**characterized in that**
- the upper and lower absorber plates (22, 24) are composed of metal.

7. Evacuated flat solar collector according to one or more of the preceding claims,
**characterized in that**
- at least the upper absorber plate (22) has a selective coating in order to increase heat absorption and reduce heat emission to the outside.

8. Evacuated flat solar collector according to one or more of the preceding claims,
**characterized in that**
- at least the upper absorber plate (22) has a photovoltaic layer at least in some places in order to make it possible to provide combined heat and power generation.

9. Evacuated flat solar collector according to one or more of the preceding claims,
**characterized in that**
- a sealing unit (84) is arranged circumferentially in the edge region between the upper and/or lower pane (14, 18).

10. Method of manufacturing an evacuated flat solar collector according to one or more of the preceding Claims 1, or 3 to 9 in conjunction with Claim 1,
**characterized by** the following method steps:
- deforming an upper absorber plate (22) for forming the supporting elements (20) with a supporting tip or cap (28),
- deforming a lower absorber plate (24) for forming the supporting elements (20) with a supporting tip or cap (28),
- placing the upper absorber plate (22) on top of the lower absorber plate (24) such that the supporting elements (20) face outwards,
- connecting the upper and lower absorber plates (22, 24) by means of lines (32) delimiting the ducts (30) of the duct system, and/or connecting the upper and lower absorber plates (22, 24) by means of points (34) in the region of the supporting elements (20),
- introducing pressure between the upper and lower absorber plates (22, 24) such that the wall of the upper and lower absorber plates (22, 24) plastically deforms to form the ducts (30),
- introducing, in a sealing manner, the absorber (12) formed by the upper and lower absorber plates (22, 24), with the provision of connections (40) for the heat transport means, which connections are in communication with the ducts, into a casing (14, 16, 18) having at least one pane (14), which covers the absorber (12) and is translucent, and
- producing a vacuum in the interior of the casing (14, 16, 18).

11. Method of manufacturing an evacuated flat solar collector according to one or more of the Claims 1, or 3 to 9 in conjunction with Claim 1,
**characterized by** the following method steps:
- deforming an upper absorber plate (22) for forming the supporting elements (20) with a supporting tip (28), and deforming contour elements of the ducts (30),
- deforming a lower absorber plate (24) for forming the supporting elements (20) with a supporting tip (28), and deforming contour elements of the ducts (30),
- placing the upper absorber plate (22) on top of the lower absorber plate (24) such that the supporting elements (20) face outwards,
- connecting the upper and lower absorber plates (22, 24) by means of lines (32) delimiting the ducts (30) of the duct system, and /or connecting the upper and lower absorber plates (22, 24) by means of points (34) in the region of the supporting elements (20),
- introducing, in a sealing manner, the absorber (12) formed by the upper and lower absorber plates (22, 24), with the provision of connections (40) for the heat transport means, which connections are in communication with the ducts, into a casing (14, 16, 18) comprising at least one pane (14), which covers the absorber (12) and is translucent, and
- producing a vacuum in the interior of the casing (14, 16, 18).

12. Method of manufacturing an evacuated flat solar collector according to one or more of the preceding Claims 2, or 3 to 9 in conjunction with Claim 2,
**characterized by** the following method steps:
- deforming an upper absorber plate (72) for forming the supporting elements (20) with a supporting tip (28),
- deforming a lower absorber plate (74) for forming the supporting elements (20) with a supporting tip (28),
- placing the upper absorber plate (22) on top of the lower absorber plate (24) such that the supporting elements (20) face outwards,
- connecting the upper and lower absorber plates (22, 24),
- attaching, so as to conduct heat, a separate tube system with tube ducts (82) to the absorber plates (72) in the region between adjacent supporting elements (20),
- introducing, in a sealing manner, the absorber (80) formed by the upper and lower absorber plates (22, 24), with the provision of connections for the heat transport means, which connections are in communication with the tube system, into a casing (14, 16, 18) having at least one pane (14), which covers the absorber (80) and is translucent, and
- producing a vacuum in the interior of the casing (14, 16, 18).

13. Method of manufacturing an evacuated flat solar collector according to one or more of the Claims 2, or 3 to 9 in conjunction with Claim 2,
**characterized by** the following method steps:
- deforming a single absorber plate of an absorber (86) for forming upwards- and downwards-facing supporting elements or caps (88) with tips (89),
- attaching, so as to conduct heat, a separate tube system with tube ducts (82) to the single absorber plate in the region between adjacent supporting elements (88),
- introducing, in a sealing manner, the absorber (86) comprising the tube duct system, with the provision of connections for the heat transport means, which connections are in communication with the tube system, into a casing comprising at least one pane (14), which covers the absorber (86) and is translucent, and
- producing a vacuum in the interior of the casing.

14. Method according to one of Claims 10 to 13,
**characterized in that**
- the upper and lower absorber plates (22, 24) are formed by deep drawing, thermoforming, or compressed air or compression stamping.

## Revendications

1. Collecteur solaire plat sous vide (10.1) avec
- un absorbeur (12.1) comportant un système de canaux avec des canaux (30) pour un fluide caloporteur,
- une vitre supérieure (14) recouvrant l'absorbeur (12.1), translucide et écartée de l'absorbeur (12.1)
- une vitre inférieure (18) recouvrant l'absorbeur (12.1) et écartée de l'absorbeur (12.1),
- les vitres supérieure et inférieure (14, 18) étant soutenues de l'intérieur contre l'effet de la pression extérieure de l'air lors de la génération de vide dans le collecteur (10.1),
- l'absorbeur (12.1) étant opaque,
- l'absorbeur (12.1) étant réalisé en matériau malléable,
- l'absorbeur (12.1) comportant une plaque d'absorbeur supérieure (22) et une plaque d'absorbeur inférieure (24) reliée à la plaque d'absorbeur supérieure (22), et des éléments d'appui (20) formés par des déformations de section transversale des plaques d'absorbeur supérieure et inférieure (22, 24) étant présents,
- les éléments d'appui (20) étant fabriqués par déformation mécanique et/ou thermique, en particulier par emboutissage, pressage des plaques d'absorbeur supérieure et inférieure (22, 24),
**caractérisé en ce que**
- les plaques d'absorbeur (22, 24) sont reliées entre elles ponctuellement dans la zone des éléments d'appui (20) et/ou linéairement dans la zone du système de canaux,
- les canaux (30) du système de canaux pour le fluide caloporteur passent entre des éléments d'appui (20) adjacents et
- les canaux (30) du système de canaux sont fabriqués par déformation mécanique et/ou thermique, en particulier par emboutissage, pressage des plaques d'absorbeur (22, 24) supérieure et/ou inférieure,
- les canaux (30) formés par les plaques d'absorbeur supérieure et inférieure (22, 24) présentant un calibre maximal (H1) qui est inférieur à la hauteur (H) des éléments d'appui (20).

2. Collecteur solaire plat sous vide (10.3) avec
- un absorbeur comportant un système de canaux avec des tubes séparés (82) pour un fluide caloporteur,
- une vitre supérieure (14) recouvrant l'absorbeur, translucide et écartée de l'absorbeur,
- une vitre inférieure (18) recouvrant l'absorbeur et écartée de l'absorbeur,
- les vitres supérieure et inférieure étant soutenues de l'intérieur contre l'effet de la pression extérieure de l'air lors de la génération de vide dans le collecteur (10.3),
- l'absorbeur étant opaque,
- l'absorbeur étant réalisé en matériau malléable,
- l'absorbeur comportant une plaque d'absorbeur supérieure (22) et une plaque d'absorbeur inférieure (24) reliée à la plaque d'absorbeur supérieure (22) ou bien une seule plaque d'absorbeur et des éléments d'appui (20, 88) formés par des déformations de section transversale des plaques d'absorbeur supérieure et inférieure ou bien de la seule plaque d'absorbeur (22, 24) étant présents,
- les éléments d'appui (20, 88) étant fabriqués par déformation mécanique et/ou thermique, en particulier par emboutissage, pressage des plaques d'absorbeur supérieure et inférieure ou bien de la seule plaque d'absorbeur (22, 24),
**caractérisé en ce que**
- les tubes (82) sont disposés de manière à être thermoconducteurs sur les plaques d'absorbeur (72) ou sur la seule plaque d'absorbeur entre des éléments d'appui (20, 88) adjacents.

3. Collecteur solaire plat sous vide selon la revendication 1 ou 2,
**caractérisé en ce que**
- les éléments d'appui (20) comportent une pointe d'appui (28) essentiellement ponctuelle et une base élargie dirigée vers le composant formé.

4. Collecteur solaire plat sous vide selon l'une quelconque ou plusieurs des revendications précédentes,
**caractérisé en ce que**
- les éléments d'appui (20) sont essentiellement réalisés en forme de cône.

5. Collecteur solaire plat sous vide selon l'une quelconque ou plusieurs des revendications précédentes,
**caractérisé en ce que**
- la vitre inférieure (18) est également translucide.

6. Collecteur solaire plat sous vide selon l'une quelconque ou plusieurs des revendications précédentes,
**caractérisé en ce que**
- les plaques d'absorbeur supérieure et inférieure (22, 24) sont réalisées en métal.

7. Collecteur solaire plat sous vide selon l'une quelconque ou plusieurs des revendications précédentes,
**caractérisé en ce que**
- au moins la plaque d'absorbeur supérieure (22) comporte un revêtement sélectif, afin d'accroître l'absorption de chaleur et de réduire l'émission de chaleur vers l'extérieur.

8. Collecteur solaire plat sous vide selon l'une quelconque ou plusieurs des revendications précédentes,
**caractérisé en ce que**
au moins la plaque d'absorbeur supérieure (22) comporte au moins dans certaines zones une couche photovoltaïque afin de pouvoir réaliser, outre la génération de chaleur, une génération d'électricité.

9. Collecteur solaire plat sous vide selon l'une quelconque ou plusieurs des revendications précédentes,
**caractérisé en ce que**
- une unité d'étanchéité (84) est disposée entre les vitres supérieure et/ou inférieure (14, 18) sur le pourtour de la zone de bord.

10. Procédé de fabrication d'un collecteur solaire plat sous vide selon l'une quelconque ou plusieurs des revendications précédentes 1 ou 3 à 9 en rapport avec la revendication 1,
**caractérisé par** les étapes de procédé suivantes :
- déformation d'une plaque d'absorbeur supérieure (22) pour former les éléments d'appui (20) avec une pointe d'appui ou un capuchon (28),
- déformation d'une plaque d'absorbeur inférieure (24) pour former les éléments d'appui (20) avec une pointe d'appui ou un capuchon (28),
- superposition des plaques d'absorbeur supérieure et inférieure (22, 24) de telle manière que les éléments d'appui (20) sont dirigés vers l'extérieur,
- liaison des plaques d'absorbeur supérieure et inférieure (22, 24) au moyen d'une liaison linéaire (32) limitant les canaux (30) du système de canaux, et/ou liaison des plaques d'absorbeur supérieure et inférieure (22, 24) au moyen de liaisons ponctuelles (34) dans la zone des éléments d'appui (20),
- introduction de pression entre les plaques d'absorbeur supérieure et inférieure (22, 24) de telle manière que la paroi des plaques d'absorbeur supérieure et inférieure (22, 24) est déformée pour former les canaux (30),
- mise en place étanchéifiante de l'absorbeur (12) formé par les plaques d'absorbeur supérieure et inférieure (22, 24) avec mise à disposition de raccords (40) correspondants avec les canaux pour le fluide caloporteur dans un boîtier (14, 16, 18) avec au moins une vitre (14) translucide recouvrant l'absorbeur (12) et
- génération d'un vide à l'intérieur du boîtier (14, 16, 18).

11. Procédé de fabrication d'un collecteur solaire plat sous vide selon l'une quelconque ou plusieurs des revendications 1 ou 3 à 9 en rapport avec la revendication 1,
**caractérisé par** les étapes de procédé suivantes :
- déformation d'une plaque d'absorbeur supérieure (22) pour former les éléments d'appui (20) avec une pointe d'appui (28) et de contours partiels des canaux (30),
- déformation d'une plaque d'absorbeur inférieure (24) pour former les éléments d'appui (20) avec une pointe d'appui (28) et de contours partiels des canaux (30),
- superposition des plaques d'absorbeur supérieure et inférieure (22, 24) de telle manière que les éléments d'appui (20) sont dirigés vers l'extérieur,
- liaison des plaques d'absorbeur supérieure et inférieure (22, 24) au moyen d'une liaison linéaire (32) limitant les canaux (30) du système de canaux, et/ou liaison des plaques d'absorbeur supérieure et inférieure (22, 24) au moyen de liaisons ponctuelles (34) dans la zone des éléments d'appui (20),
- mise en place étanchéifiante de l'absorbeur (12) formé par les plaques d'absorbeur supérieure et inférieure (22, 24) avec mise à disposition de raccords (40) correspondants avec les canaux pour le fluide caloporteur dans un boîtier (14, 16, 18) avec au moins une vitre (14) translucide recouvrant l'absorbeur (12) et
- génération d'un vide à l'intérieur du boîtier (14, 16, 18).

12. Procédé de fabrication d'un collecteur solaire plat sous vide selon l'une quelconque ou plusieurs des revendications 2 ou 3 à 9 en rapport avec la revendication 2,
**caractérisé par** les étapes de procédé suivantes :
- déformation d'une plaque d'absorbeur supérieure (72) pour former les éléments d'appui (20) avec une pointe d'appui (28),
- déformation d'une plaque d'absorbeur inférieure (74) pour former les éléments d'appui (20) avec une pointe d'appui (28),
- superposition des plaques d'absorbeur supérieure et inférieure (22, 24) de telle manière que les éléments d'appui (20) sont dirigés vers l'extérieur,
- liaison des plaques d'absorbeur supérieure et inférieure (22, 24),
- mise en place thermoconductrice d'un système de tubes séparé avec des canaux de tubes (82) sur les plaques d'absorbeur (72) dans la zone située entre des éléments d'appui adjacents (20),
- mise en place étanchéifiante de l'absorbeur (80) formé par les plaques d'absorbeur supérieure et inférieure (22, 24) avec mise à disposition de raccords (40) correspondants avec le système de tubes pour le fluide caloporteur dans un boîtier (14, 16, 18) avec au moins une vitre (14) translucide recouvrant l'absorbeur (80) et
- génération d'un vide à l'intérieur du boîtier (14, 16, 18).

13. Procédé de fabrication d'un collecteur solaire plat sous vide selon l'une quelconque ou plusieurs des revendications 2 ou 3 à 9 en rapport avec la revendication 2,
**caractérisé par** les étapes de procédé suivantes :
- déformation d'une seule plaque d'absorbeur (86) pour former des éléments d'appui ou des capuchons (88) avec pointe (89) orientés vers le haut et vers le bas,
- mise en place thermoconductrice d'un système de tubes séparé avec des canaux de tubes (82) sur une seule plaque d'absorbeur dans la zone située entre des éléments d'appui adjacents (88),
- mise en place étanchéifiante de l'absorbeur (86) avec le système de canaux à tubes, avec mise à disposition de raccords correspondant avec les canaux à tubes pour le fluide caloporteur dans un boîtier avec au moins une vitre (14) translucide recouvrant l'absorbeur (86) et
- génération d'un vide à l'intérieur du boîtier.

14. Procédé selon l'une quelconque des revendications 10 à 13,
**caractérisé en ce que**
- les plaques d'absorbeur supérieure et inférieure (22, 24) sont formées par emboutissage, par air comprimé ou par pressage.
